# FASCICULE DE BREVET EUROPEEN

(11) **EP 2 183 087 B1**
(45) Date de publication et mention de la délivrance du brevet: **15.02.2012**
(21) Numéro de dépôt: 08807417.4
(22) Date de dépôt: 25.08.2008
(51) Int. Cl.: B29C 43/20, B29C 37/00

(54) **OBJET MULTICOUCHE D'EPAISSEUR VARIABLE**
MEHRSCHICHTIGES OBJEKT MIT VARIABLER DICKE
MULTILAYER OBJECT WITH VARIABLE THICKNESS

(30) Priorité: 05.09.2007 WO PCT/IB2007/053573
(43) Date de publication de la demande: 12.05.2010
(73) Titulaire: Aisapack Holding SA, 1896 Vouvry (CH)
(72) Inventeur: THOMASSET, Jacques, CH-1896 Vouvry (CH)
(74) Mandataire: Grosfillier, Philippe
(86) Numéro de dépôt international: PCT/IB2008/053403
(87) Numéro de publication internationale: WO 2009/031066

(56) Documents cités:
- EP-A- 1 832 414
- WO-A-03/092979
- JP-A- 4 169 207
- US-A1- 2003 227 107

## Description

### Domaine de l'invention

La présente invention se rapporte à des objets multicouches sans symétrie axiale fabriques à partir d'une dose multicouche de résine thermoplastique à l'état fondu selon la revendication 1. Elle concerne également les doses et les procédés utilisés en rapport avec ces objets.

Le brevet JP 04169207 décrit un tel objet selon le préambule de la revendication 1.

### Etat de la technique

Les brevets US4876052, JP2098415 et les demandes de brevet W02005087473, W02005087601, W02005084904, W02005084903, W02005084902 décrivent des objets multicouches ainsi que des méthodes ou techniques de fabrication d'objets multicouches par compression moulage. Ces méthodes consistent à comprimer dans un moule une dose multicouche de résine thermoplastique à l'état fondu ; l'écrasement de ladite dose conduisant à un objet comportant lui aussi une structure multicouche. Les objets obtenus selon ces méthodes présentent des propriétés particulièrement avantageuses issues de la structure multicouche qui est obtenue dans l'épaisseur de l'objet. Ainsi, de tels objets peuvent avoir une perméabilité réduite aux gaz, aux arômes, ou diverses substances chimiques.

Cependant, les méthodes décrites dans l'art antérieur permettent de réaliser seulement des objets multicouches ayant un axe de symétrie, c'est-à-dire formant un corps de révolution. Ces objets présentent une longueur d'écoulement identique dans toutes les directions. De nombreux objets ne présentent pas d'axe de symétrie et par conséquent ne peuvent pas être réalisés à partir des descriptions de l'art antérieur.

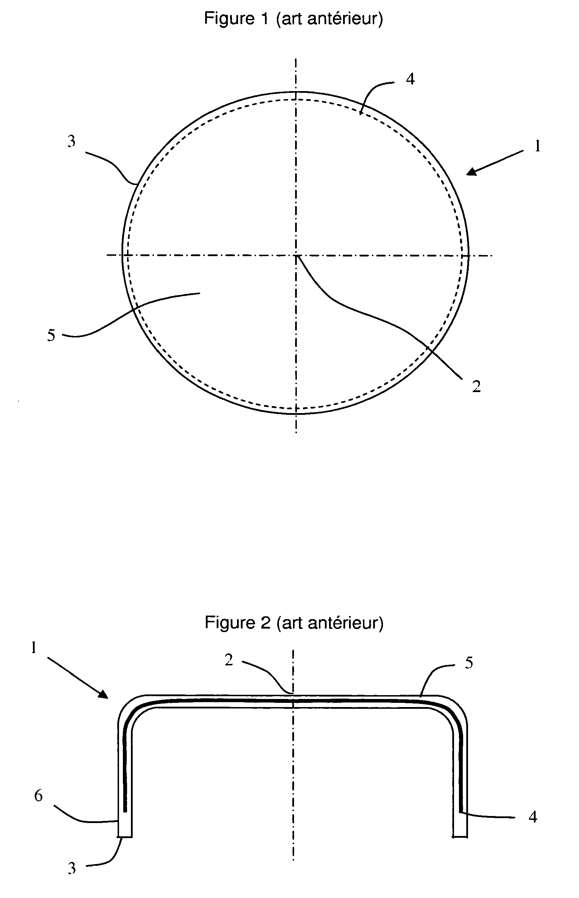

Les figures 1 et 2 illustrent un objet multicouche dont la fabrication par compression moulage est décrite dans l'art antérieur. La figure 1 représente l'objet multicouche en vue de dessus tandis que la figure 2 illustre la section de l'objet. L'objet multicouche 1 comporte un centre d'alimentation 2 correspondant au point autour duquel la dose est centrée dans le moule avant compression. Pour les objets de l'art antérieur le point 2 correspond à l'intersection entre l'objet 1 et l'axe de symétrie. Le point 2 est défini aussi comme le centre d'écoulement, c'est-à-dire le point autour duquel la matière s'écoule lors de la compression. L'extrémité 3 de l'objet correspond à la plus grande distance d'écoulement. La structure multicouche présente une limite 4 à partir de laquelle l'épaisseur de l'objet n'est formée que d'une seule couche. Le contour 4 délimite la partie multicouche 5, de la partie monocouche 6 de l'objet. Pour les objets de l'art antérieur, la distance entre les contours 3 et 4 est constante. Généralement, il est souhaité de réduire la partie 6 comportant seulement une seule couche.

La figure 2 présente la vue en coupe de l'objet. La structure multicouche forme une partie dudit objet qui s'étend depuis le centre d'écoulement jusqu'à l'extrémité 3. Comme l'objet forme un corps de révolution, l'écoulement est identique dans toutes les directions autour du point 2.

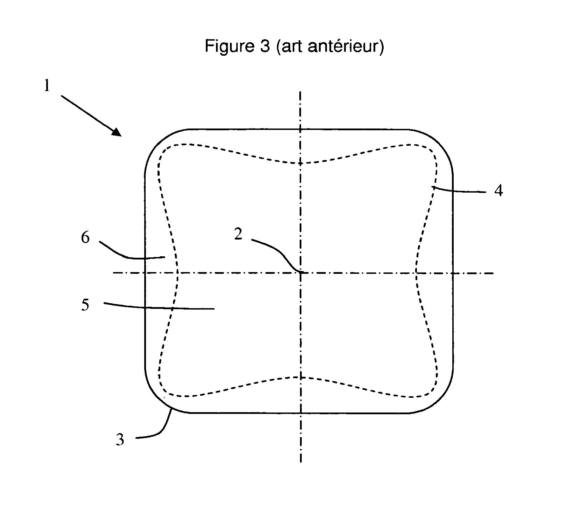

La figure 3 illustre un objet 1 sans axe de symétrie réalisée selon les méthodes connues. La propagation radiale de la structure multicouche varie selon l'écoulement qui n'est pas identique dans toutes les directions autour du point 2. La structure multicouche présente une limite 4 à partir de laquelle l'épaisseur de l'objet n'est formée que d'une seule couche. Le contour 4 délimite la partie multicouche 5, de la partie monocouche 6 de l'objet. La distance entre les contours 3 et 4 n'est pas constante ; la répartition de la structure multicouche dans l'objet 1 n'est donc pas optimale.

### Objet de l'invention

L'invention concerne des objets multicouches sans axe de symétrie réalisés par compression moulage d'une dose multicouche ; ainsi que leur méthode de fabrication. Ces objets peuvent être par exemple des têtes de tube ovales, des bouchons ovales, ou des composants d'emballage rectangulaires. L'invention permet une meilleure répartition de la structure multicouche et en particulier aux extrémités de l'objet.

### Description de l'invention

L'invention s'intéresse à la réalisation d'un objet multicouche ne formant pas un corps de révolution, l'objet étant fabriqué par compression moulage d'une dose multicouche de résine thermoplastique à l'état fondu.

L'invention concerne un objet sans axe de symétrie, moulé par compression d'une dose multicouche de résine. Cet objet se caractérise par une épaisseur non constante qui permet une répartition optimale de la structure multicouche dans l'objet.

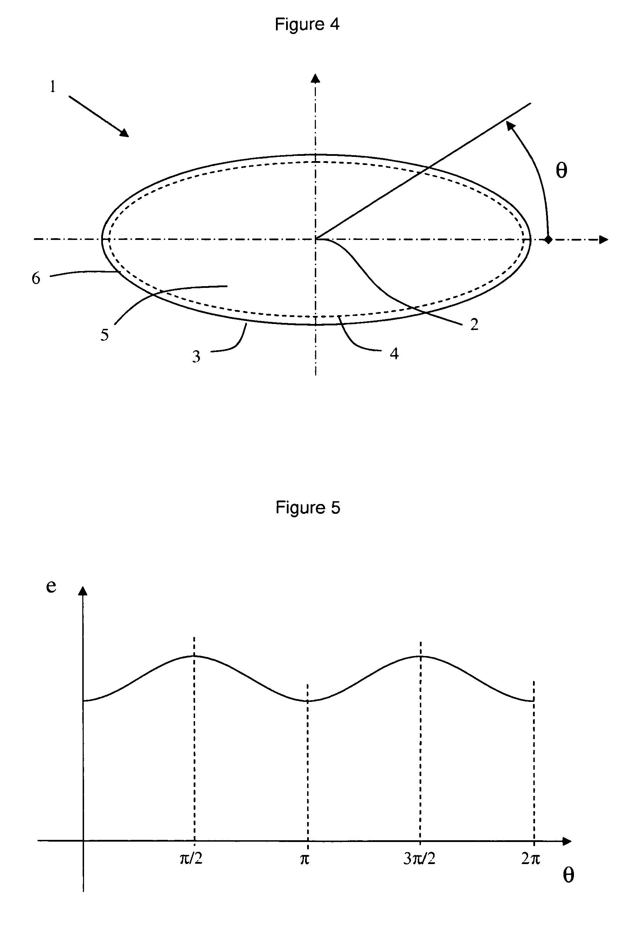

Un premier exemple de réalisation de l'invention est illustré sur les figures 4 et 5. La figure 4 représente un objet 1 formé d'une coque ovale de faible épaisseur et délimité par un contour 3. Cet objet est fabriqué par compression d'une dose multicouche positionnée dans la cavité d'un moule. La dose est centrée sur le point 2 représentant le centre d'écoulement. Du fait du profil d'épaisseur de l'objet 1, l'écoulement multicouche est modifié et il en résulte une répartition meilleure de la structure multicouche 5 dans l'objet. Le contour 4, délimitant la structure multicouche 5 de la structure monocouche 6, se trouve à distance constante du contour 3 formant la périphérie de l'objet. Une répartition contrôlée de la structure multicouche dans l'objet est obtenue grâce au profil d'épaisseur.

Le profil d'épaisseur de l'objet 1 est représenté figure 5. La figure 5 indique l'épaisseur de l'objet en fonction de la position angulaire θ, l'angle θ étant indiqué figure 4. Il a été trouvé en particulier que l'épaisseur de l'objet 1 est plus grande quand la longueur curviligne entre le point 2 et le bord 3 est petite ; et inversement. Le profil d'épaisseur de l'objet 1 est en relation avec la distance reliant le centre d'écoulement 2 et l'extrémité 3 de l'objet. Quand l'angle θest égal à π/2 ou 3π/2, la longueur curviligne entre le point 2 et le bord 3 est minimale tandis que l'épaisseur est maximale. Inversement, quand l'angle θ est égal à 0 ou π, la longueur curviligne entre le point 2 et le bord 3 est maximale tandis que l'épaisseur est minimale.

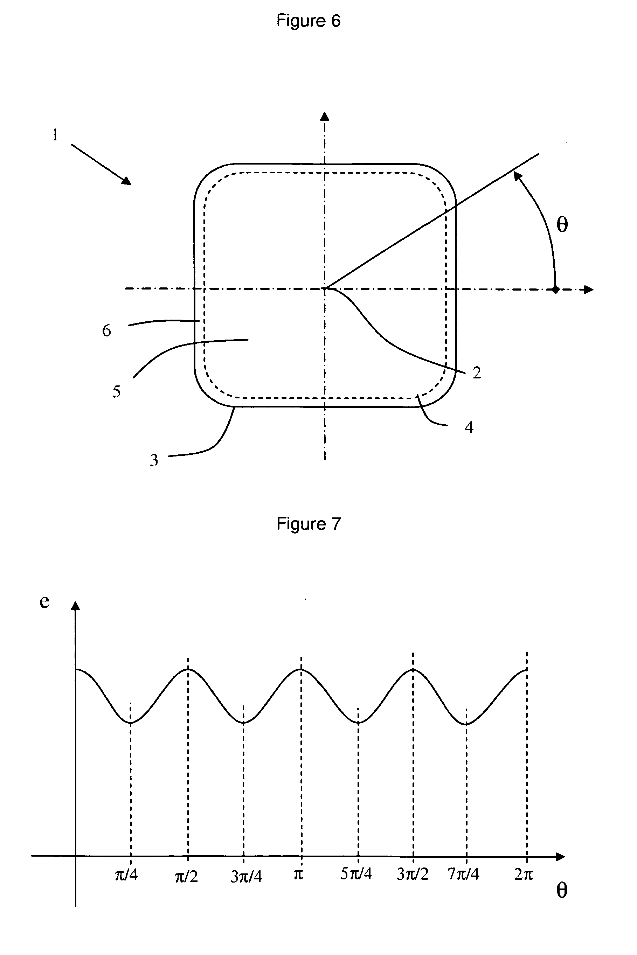

Un deuxième exemple de réalisation de l'invention est illustré figures 6 et 7. La figure 6 représente un objet 1 formant une coque délimitée par un contour 3. La coque ne présente pas d'axe de symétrie ; la distance entre le centre de gravité 2 et le contour 3 n'est pas constante. Lors de la fabrication de l'objet, la dose multicouche est centrée sur le centre de gravité qui est aussi le centre d'écoulement 2. Le profil d'épaisseur de l'objet est représenté sur la figure 7. L'épaisseur dépend de la position angulaire θ indiquée figure 6. Plus la distance curviligne (longueur d'écoulement) reliant le point 2 à la périphérie de l'objet 3 est grande, plus l'épaisseur de l'objet est petite, et vice versa. Le profil d'épaisseur de l'objet permet une répartition optimale de la structure multicouche. La distance entre le contour 4 formé par la limite de la structure multicouche et le bord 3 est constante sur toute la périphérie de l'objet.

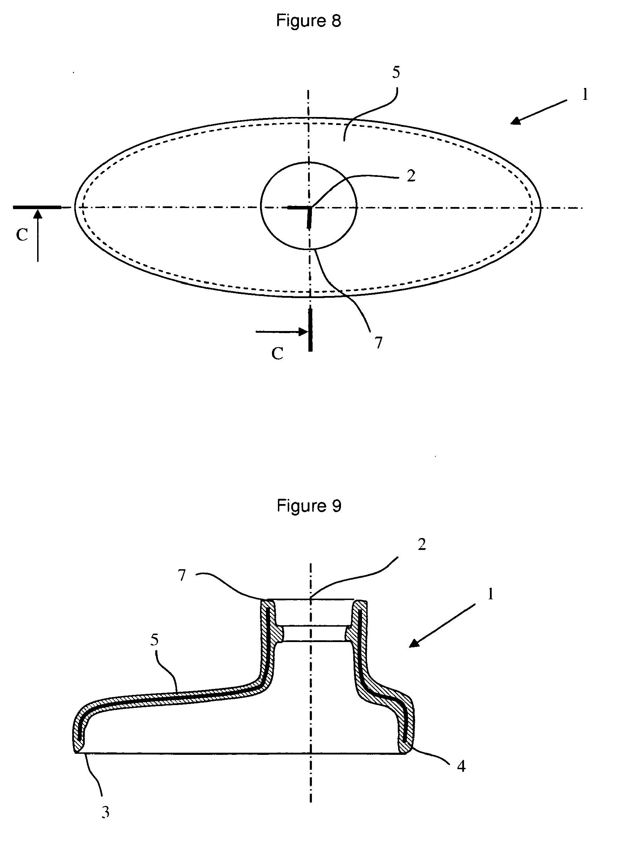

La figure 8 illustre une épaule de tube 1 comprenant un goulot 7. La vue de cette épaule selon le plan de coupe C est illustré figure 9. La figure 9 montre que l'épaisseur n'est pas constante au niveau de l'épaulement. Le profil d'épaisseur permet une répartition optimale de la structure multicouche, On observe que la distance entre la limite de la structure multicouche 4 et la périphérie 3 de l'épaule est constante sur tout le pourtour.

Comme le montre la figure 9 la variation d'épaisseur peut être localisée dans l'objet. Ainsi, le goulot de l'épaule est d'épaisseur constante sur toute la périphérie, tandis que l'épaulement est d'épaisseur variable. L'épaule illustrée figure 8 et 9 est particulièrement intéressante car la structure multicouche est répartie de façon homogène dans tout l'objet ; et la propagation contrôlée de la structure multicouche permet le soudage d'une jupe de tube au niveau du bord 3 de l'objet.

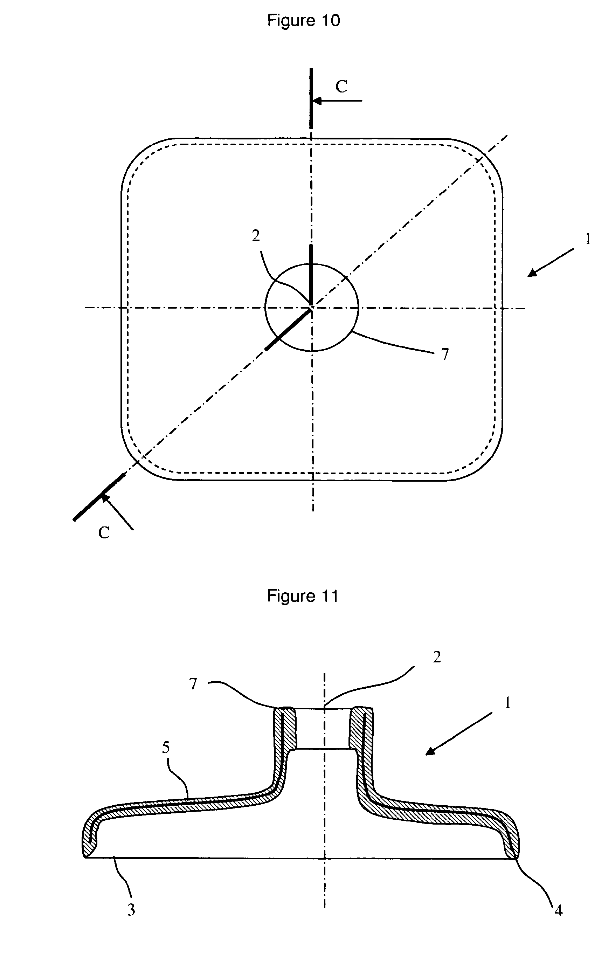

Les figures 10 et 11 montrent un autre exemple d₂ réalisation de l'invention. L'objet 1 représente le goulot d'un emballage destiné à contenir des produits liquides. Cet emballage est constitué du goulot 1, d'un corps tubulaire soudé au niveau de l'extrémité 3 de l'objet 1 ; et d'un système d'ouverture - fermeture permettant d'obstruer l'orifice 7 lorsque l'emballage est fermé. La figure 10 illustre l'objet 1 en une vue de dessus. L'objet 1 ne présente pas d'axe de symétrie et forme une coque rectangulaire comprenant un orifice. Le profil d'épaisseur de l'objet 1 est illustré sur la figure 11 représentant la vue en coupe selon C de l'objet 1.

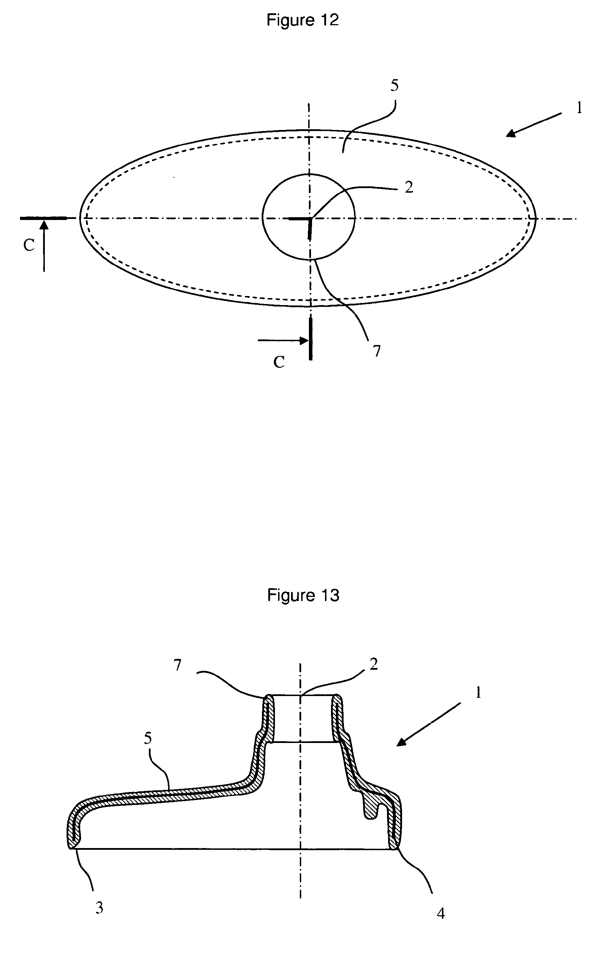

Un dernier exemple est illustré figures 12 et 13. La figure 12 représente une épaule de tube ovale 1 vue du dessus. son profil d'épaisseur est illustré sur la figure 11 représentant la vue en coupe selon C. Cette épaule présente la particularité d'une augmentation d'épaisseur locale formant une sorte de nervure radiale d'épaisseur variable. Son épaisseur est maximale au niveau du petit d'axe de l'épaule, c'est-à-dire à l'endroit ou la longueur curviligne reliant le centre découlement 2 au bord 3 est minimale.

Les structures multicouches des objets obtenus sont d'une grande diversité. Par exemple, l'association d'une résine de commodité avec une résine barrière permet d'améliorer les propriétés d'imperméabilité des objets vis-à-vis de l'oxygène ou des aromes. Les structures multicouches suivantes souvent utilisées dans le domaine de l'emballage sont particulièrement avantageuses :
- PE / adhésif / EVOH / adhésif / PE
- PP / adhésif / EVOH / adhésif / PP
- PET / PET + oxygen scavengers / adhésif / EVOH / adhésif / PET Avec
- PE : polyéthylène
- PP : polypropylène
- PET : polyester téréphthalate
- EVOH : éthylène vinyle alcool
- Adhésif : polymère utilisé pour associer plusieurs résines

La dose multicouche est de préférence axisymétrique, mais l'utilisation de dose sans axe de symétrie peut également être utilisée. Cependant, lorsque la dose ne comporte pas d'axe de symétrie, une orientation angulaire de la dose par rapport à la cavité du moule est nécessaire.

Par ailleurs, la présente invention permet également d'obtenir des structures multicouche qui exercent un effet barrière par rapport à la transmission d'ondes électromagnétiques, en particulier dans le spectre visible et UV. Dans ces cas, la couche barrière est composée d'une résine thermoplastique chargée en éléments absorbants d'ondes électromagnétiques.

Un positionnement précis de la dose dans la cavité du moule est nécessaire pour obtenir une propagation de la structure multicouche jusqu'à l'extrémité de l'objet. La dose est habituellement centrée dans la cavité du moule au niveau du centre d'écoulement qui correspond souvent au centre de gravité de l'objet. Lorsque la propagation de la couche barrière jusqu'à l'extrémité de l'objet n'est pas nécessaire un centrage imprécis de la dose dans la cavité du moule peut être accepté.

## Revendications

1. Objet multicouche sans axe de symétrie fabriqué par compression dans un moule d'une dose multicouche de résines thermoplastiques à l'état fondu, objet comportant un centre d'alimentation correspondant au point autour duquel la dose est centrée dans le moule avant compression, la distance entre ledit centre d'alimentation et le bord de l'objet, nommée longueur d'écoulement, est variable;
**caractérisé par le fait que** pour une longueur d'écoulement donnée, plus la longueur d'écoulement est grande, plus l'épaisseur moyenne le long de cette longueur est petite, et vice-versa.

2. Objet multicouche selon la revendication 1 dans lequel la structure multicouche a une répartition homogène.

3. Objet selon la revendication selon la revendication 1 ou 2 dont la forme est ovale.

4. Objet selon la revendication selon la revendication 1 ou 2 dont la forme est carrée.

5. Objet selon la revendication selon la revendication 1 ou 2 dont la forme est rectangulaire.

6. Objet selon la revendication selon la revendication 1 ou 2 dont la forme est une épaule de tube.

## Claims

1. Multilayer article without an axis of symmetry manufactured by compression moulding of a multilayer charge of molten thermoplastic resins, article having a feed centre corresponding to the point around which the charge is centred in the mould before compression, the distance between said feed centre and the edge of the article, known as the flow length, is variable;
**characterized in that**, for a given flow length, the greater the flow length, the smaller the average thickness along this length, and *vice versa.*

2. Multilayer article according to Claim 1, in which the multilayer structure has a homogeneous distribution.

3. Article according to Claim 1 or 2, the shape of which is oval.

4. Article according to Claim 1 or 2, the shape of which is square.

5. Article according to Claim 1 or 2, the shape of which is rectangular.

6. Article according to Claim 1 or 2, the shape of which is a tube shoulder.

## Patentansprüche

1. Mehrschichtiger Gegenstand ohne Symmetrieachse, der durch Verpressen einer mehrschichtigen Charge von thermoplastischen Harzen im geschmolzenen Zustand in einer Form hergestellt wird, wobei der Gegenstand ein Speisezentrum aufweist, das dem Punkt entspricht, um den die Charge in der Form vor dem Verpressen zentriert ist, wobei der Abstand zwischen dem Speisezentrum und dem Rand des Gegenstands, der "Fließlänge" genannt wird, variabel ist;
**dadurch gekennzeichnet, dass** für eine gegebene Fließlänge gilt: Je größer die Fließlänge ist, desto kleiner ist die mittlere Dicke entlang dieser Länge, und umgekehrt.

2. Mehrschichtiger Gegenstand nach Anspruch 1, wobei die mehrschichtige Struktur eine homogene Verteilung aufweist.

3. Gegenstand nach Anspruch 1 oder 2, dessen Form oval ist.

4. Gegenstand nach Anspruch 1 oder 2, dessen Form quadratisch ist.

5. Gegenstand nach Anspruch 1 oder 2, dessen Form rechteckig ist.

6. Gegenstand nach Anspruch 1 oder 2, dessen Form eine Tubenschulter ist.
